# EUROPEAN PATENT SPECIFICATION

(11) **EP 2 647 282 B1**
(45) Date of publication and mention of the grant of the patent: **01.08.2018**
(21) Application number: 13159716.3
(22) Date of filing: 18.03.2013
(51) Int. Cl.: A01F 15/07

(54) **Baler and method for forming a bale**
Ballenpresse und Verfahren zum Formen eines Ballens
Ramasseuse-presse et procédé de formation d'une balle

(30) Priority: 05.04.2012 FI 20120111
(43) Date of publication of application: 09.10.2013
(73) Proprietor: Agronic Oy, 86600 Haapavesi (FI)
(72) Inventor: Kuronen, Urpo, 86600 Haapavesi (FI)
(74) Representative: Berggren Oy, Helsinki & Oulu

(56) References cited:
- EP-A1- 0 893 053
- DE-A1- 4 208 091
- US-A1- 2004 134 177

## Description

The object of the invention is a baler comprising a baling chamber for forming a bale, a wrapper for wrapping a protective film around the formed bale, wherein the wrapper comprises a wrapping area, and a conveyor for conveying the bale from the baling chamber to the wrapper, which conveyor has a second end on the wrapper side. The invention further relates to a method of forming a bale wrapped in a protective film with a baler that comprises a baling chamber, a conveyor and a wrapper, in which method the material to be baled is formed into a bale in the baling chamber, the bale is conveyed with the conveyor from the baling chamber into the wrapper and with the wrapper a protective film is wrapped around the bale.

Forage crops and hay are stored and transported generally in bales. For baling of forage crops there are balers that are moved close to the place of harvesting for baling. The harvested forage is proportioned through a hopper to the baling chamber of the baler, where the forage crops are formed into a round bale. Such balers stay stationary during the baling. Known are also round balers pulled behind a tractor, which lift the forage bedding by means of a pick-up roller into the device and form a cylindrical bale of it while the baler is moving. Both stationary and moving balers are often equipped with a wrapper, by means of which an air and watertight plastic protective film is wrapped tightly around the bale. After wrapping with a protective film the round bale is removed from the baler.

In known balers, the wrapper is located in the back of the device and the baling chamber in the front part of the device. A round bale is conveyed along the conveyor from the baling chamber onto a separate wrapping table belonging to the wrapper. Typically, the wrapping table comprises two parallel supporting rollers, on which the horizontally positioned bale is rotated about its longitudinal axis. At the same time during the rotating, elastic protective film is wrapped around the bale. Thus, the bale will be completely enclosed in a protective film. Some balers equipped with a wrapper are described in publications DE 4120733 A1 and US 2008/0264031 A1.

In known balers the wrapping table is usually attached pivotally to the chassis of the device, so that the wrapping table can be inclined in connection with the receiving and removing from the wrapping table. In balers, there are means for inclining and supporting the wrapping table and an actuator for rotating the rollers of the wrapping table. The above-mentioned equipment raises the manufacturing costs of the baler.

Documents DE 4208091 A1 and US 2004/134177 A1 disclose a baler comprising a baling chamber, a wrapper with a wrapping area and a conveyor for moving a bale from the baling chamber to the wrapper. The second end of the conveyor extends to the wrapping area of the wrapper.

The object of the invention is to provide a baler and a method for forming a bale wrapped with a protective film, with which the disadvantages and drawbacks of the prior art can be diminished.

The objects according to the invention are achieved through a baler and a method, characterized in what is disclosed in the independent claims. Some preferred embodiments of the invention are disclosed in the dependent claims.

The invention relates to a baler comprising a baling chamber for forming a bale, a wrapper for wrapping a protective film around the formed bale and a conveyor for conveying the bale from the baling chamber to the wrapper. The baling chamber and the wrapper are known as such, so that their structure is not described in more detail in this connection. Preferably, the baler according to the invention is a round baler and the baling chamber comprises means for making round bales. The wrapper comprises a wrapping area, where wrapping of the protective film around the bale takes place. The conveyor is a conventional elongated conveyor with a second end on the wrapper side. The basic idea of the invention is that the second end of the conveyer is adapted to extend to the wrapping area of the wrapper for wrapping the protective film around the bale laying on the conveyor. Thus, the baler according to the invention does not include a separate wrapping table, on which the bale is placed for the time of wrapping, but the bale rests on the conveyor during the wrapping with the protective film, especially on the second end on the wrapper side of the conveyor.

In a preferred embodiment of the baler according to the invention the second end of the conveyor comprises at least one movable stopping roll, which is movable to the first position above the level of the upper surface of the conveyor and to the second position away from the level of the upper surface of the conveyor. In the longitudinal direction of the conveyor, the stopping roll does not necessarily need to be in the first position on the upper surface of the conveyor, but it can be somewhat further away from the second end of the conveyor. The stopping rolls, however, need, to be in the first position in relation to the conveyor in such a position that they are clearly on the trajectory of the bale moving on the conveyor. In the second position the stopping rolls may be turned to the side of the conveyor such that between them a free space is formed, the width of which is equal to the width of the bale formed in the baling chamber. Preferably, the conveyor comprises a first side and a second side, and in the second end of the conveyor there are two stopping rolls, the first stopping roll of them being on the first side of the conveyor and the second stopping roll being on the second side of the conveyor. The movement of the bale can be stopped by means of the stopping roll/rolls during the wrapping, i.e. the bale can be prevented from moving forward on the conveyor. The conveyer can thus be in operation continually and it does not need to be stopped for the wrapping with the protective film. When the protective film has been wrapped in its place, the stopping rolls can be moved into the second position, where they no longer prevent the bale from moving forward on the conveyor.

In a preferred embodiment of the baler according to the invention at a distance from the second end of the conveyor there is at least one supporting roll, which is movable to the first position above the level of the upper surface of the conveyor and to the second position away from the level of the upper surface of the conveyor. Preferably, at a distance from the second end of the conveyor there are two supporting rolls, the first supporting roll of which is on the first side of the conveyor and the second supporting roll is on the second side of the conveyor. The supporting rolls are, however, so close to the second end of the conveyor that they are, like the stopping rolls, in the wrapping area of the wrapper. In the phase of wrapping with the protective film, from the pulled-tight protective film a tractive force is applied to the bale, which force aims at moving and rotating the bale laying on the conveyor. By means of the supporting rolls the moving of the bale backwards on the conveyor and the twisting of the bale laying on the conveyor during the wrapping with the protective film can be prevented. The supporting rolls and the stopping rolls do not lift the bale off from the surface of the conveyor, but the bale continues leaning on the conveyor, even if the stopping rolls and the supporting rolls are in the first position.

In a preferred embodiment of the baler according to the invention, the conveyor comprises a conveyor belt and an actuator for rotating the conveyor belt. The conveyor belt may be a solid, wide belt or it may comprise stiff plates or bars joined together and with slots between them. It is important for the structure of the conveyor belt that it provides a sufficient supporting surface for bearing a bale conveyed on it. For rotating an endless conveyor belt only one actuator is needed in the baler.

In another preferred embodiment of the baler according to the invention, the wrapper comprises a support frame and at least one bearing-mounted wrapping arm for bearing and moving the protective film roll. The wrapping arm attached to the support frame and the protective film roll mounted on it may be rotated horizontally around the bale, whereby protective film wrapping around the bale is released from the protective film roll. Simultaneously, the bale can be rotated in its position about a horizontal axis of rotation by allowing the conveyor belt of the conveyer to rotate. Naturally, then the stopping and supporting rolls must be in the first position preventing the bale from moving.

Another preferred embodiment of the baler according to the invention is a movable baler with wheels and a drawbar for fastening to the towing vehicle. A movable baler can be moved close to the material to be baled at place of baling. The movable baler may also be a device towed behind a work machine, which device picks up the material to be baled for example from a field and forms continuously bales of it during the movement of the baler.

In the method according to the invention, a bale wrapped in a protective film is formed with a baler that comprises a baling chamber, a conveyor and a wrapper. In the method, first, a bale of the material to be baled is formed in the baling chamber, preferably a round bale, which is moved from the baling chamber to the wrapper by a conveyor. By means of the wrapper a protective film is wrapped around the bale in the wrapper. The method is characterized in that the protective film is wrapped around a bale laying on the conveyor. Thus, the bale is not moved to a separate wrapping table for the time of wrapping.

In a preferred embodiment of the method according to the invention, the bale is prevented from moving forward on the conveyor during the wrapping with a protective film. Preferably, the preventing is carried out by moving at least one stopping roll onto the first side of the bale above the upper surface of the conveyor. Since the movement of the bale is prevented, the conveyor does not need to be stopped during the wrapping with the protective film.

In another preferred embodiment of the method according to the invention, the bale is prevented from being twisted and from moving on the conveyor during the wrapping with a protective film. Preferably, the preventing is carried out by moving at least one supporting roll to the second side of the bale above the upper surface of the conveyor. Thus, the tractive forces caused by the tightly-wrapped protective film cannot move the bale laying on the conveyor.

Yet in another preferred embodiment of the method according to the invention, during the wrapping with the protective film the bale is rotated about the horizontal axis by operating the conveyor. When the moving of the bale forward and backwards on the conveyor is prevented for example by means of stopping rolls and supporting rolls, the running conveyor puts the bale in a stationary, rotating movement.

Yet in another preferred embodiment of the method, the bale is formed of forage crops. Forage crops that can be baled and are suitable for the method include e.g. maize, different cereals and straw plants. In the method, during the baling, a stationary baler may be used, to which forage material to be baled is dosed through a feed hopper. In the method, a movable baler towed behind a work machine may also be used, which baler gathers the material to be baled from the field directly to the baling chamber and forms bales of it while the baler is moving. Such use of a movable baler is especially suited to baling of roughage and straw.

Yet in another preferred embodiment of the method according to the invention, the bale is formed of waste material, industrial and agricultural side products or of natural material. Waste material fit for baling and suited to the method include among other things municipal waste produced in households and wrapped with protective film for transport and storage of the waste. Typical side products and natural products to be baled include among other things sawdust and cutter shavings, peat and straw.

An advantage of the baler according to the invention is that it is of simple construction and reliable in operation. Thanks to the simple structure, savings are made in the manufacturing costs of the baler.

An advantage of the method according to the invention is that handling of the bale in the baler will become easier and quicker.

In the following, the invention will be described in detail. In the description, reference is made to the enclosed drawings, in which
Figure 1a shows by way of example a baler according to the invention in a side view,
Figure 1b shows a baler of Fig. 1a in a top view,
Figures 2a and 2b show by way of example the second end of the baler according to the invention in a top view,
Figure 2c shows by way of example the second end of the baler according to the invention in a side view in the phase of wrapping with the protective film and
Figure 2d shows by way of example the second end of the baler according to the invention in a top view as the bale is discharged from the wrapper.

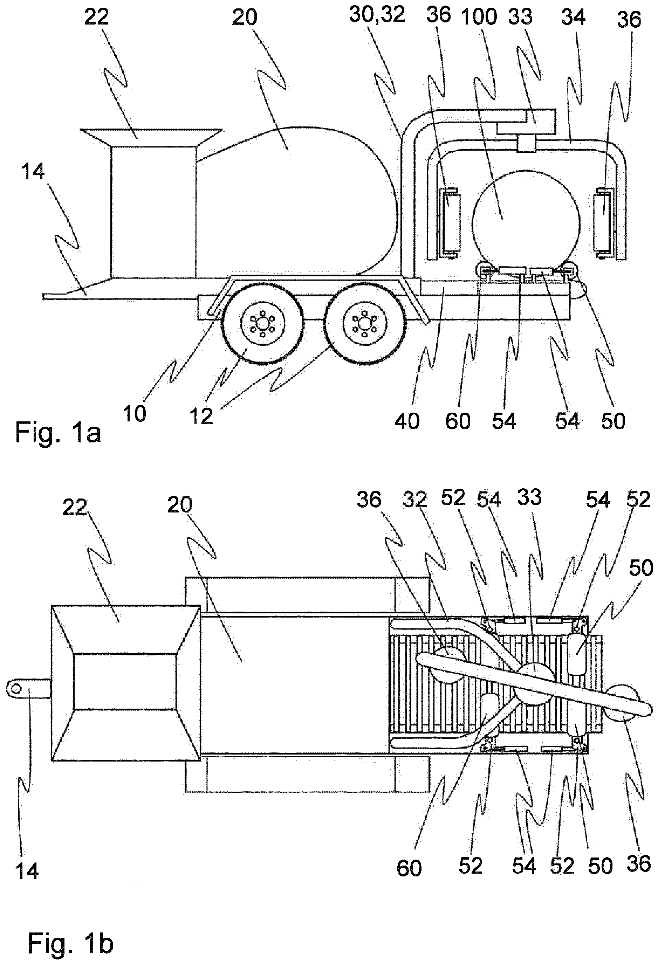

Figure 1a shows by way of example a baler according to the invention in a side view, and Figure 1b shows the same baler in a top view. The baler consists of an elongate chassis 10 constructed from bar-formed parts, into which chassis two axles with wheels 12 at their ends have been fastened. The first end of the chassis comprises a drawbar 14 with a drawbar eye for connecting to the work machine or towing vehicle. The first end of the chassis comprises the baling chamber 20 and the hopper 22, through which the material to be baled is fed into the baling chamber. Inside the baling chamber there are baling means, by means of which the baler forms a round bale from the material to be baled, such as forage crops, fed to the baling chamber. The baling means used in the making of a round bale are known as such, and it will not be described in more detail in this connection.

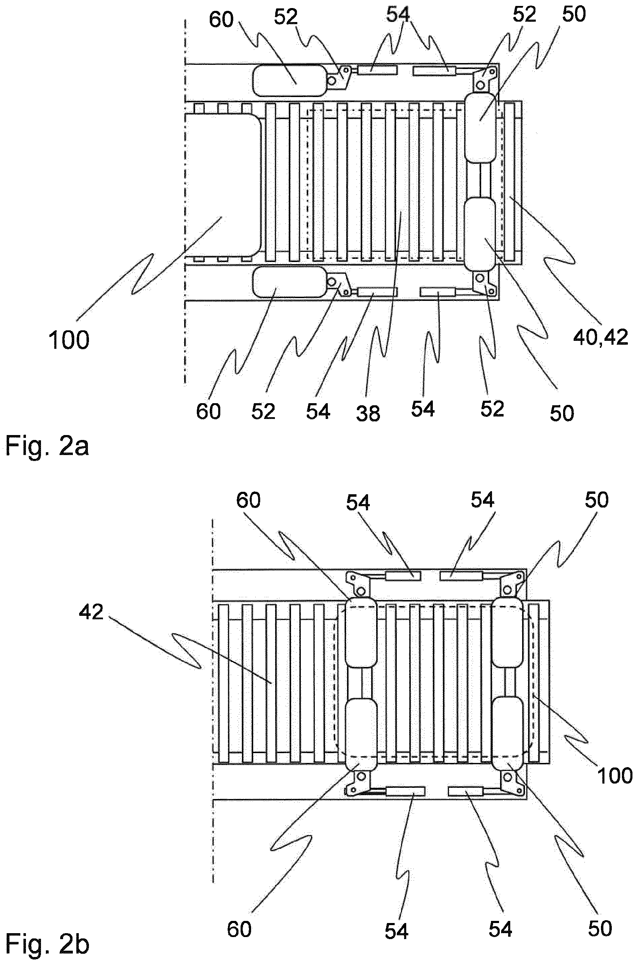

The second end of the chassis comprises the wrapper 30, which comprises two formed support arms 32. The support arms are fastened at their first ends to the chassis of the baler, and their second ends are joined to a connecting piece 33 above the second end of the chassis. Two wrapping arms 34 are fastened rotatably to the connecting piece, the free ends of which arms are directed substantially vertically downwards. The wrapping arms comprise brackets, onto which protective film rolls 36 are fastened. In the middle of the circular trajectory of the wrapping arms there is the wrapping area 38 (Fig. 2a), to which the bale to be wrapped with a protective film is positioned for the wrapping with the protective film. The wrapper is also known as such, and it will not be described in more detail in this connection.

The baler further comprises a conveyor 40, the first end of which is in the baling chamber and the second end of which extends to the wrapping area of the wrapper to the second end of the chassis 10. The wrapping area of the wrapper is thus, seen in the longitudinal direction, in the area between the first and the second end of the conveyor, quite in the second end of the conveyor. The type of the conveyor is a belt conveyor, which comprises two end rollers, side guides between the end rollers and an endless conveyor belt going around the both end rollers. The conveyor belt comprises a plurality of parallel stiff, plate-formed bars fastened to each other by flexible edge strips. The side guides support the edges of the conveyor belt in the area between the end rollers. The conveyor further comprises an actuator, preferably a motor, by which one end roller is rotated and thus the conveyor belt is brought into a rotating movement about the end rollers.

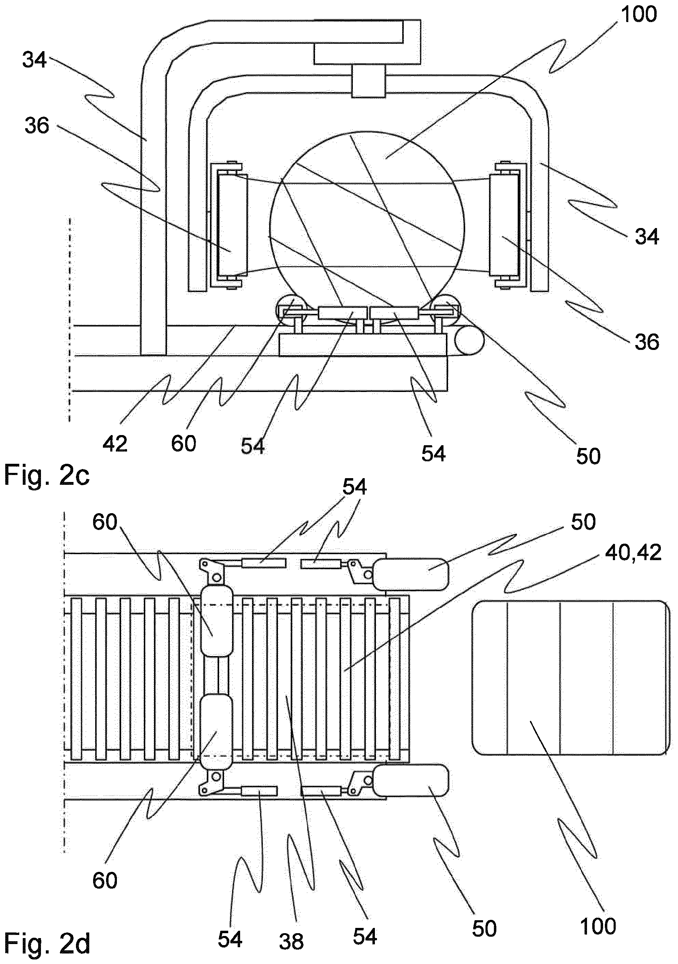

At the second end of the conveyor, above the upper surface level of the conveyor, there are two cylindrical stopping rolls 50. At one end of the stopping rolls there is an articulated arm 52 (Fig. 1b), which is fastened to the chassis of the baler with a joint pin. The first stopping roll is fastened to the chassis on the first side of the conveyor and the second stopping roll is fastened at the same point, seen in the longitudinal direction, on the second side of the conveyor. The second end of the articulated arm is joined with a turning cylinder 54. By changing the length of the turning cylinder the stopping rolls can be turned to the first position shown in Figure 1b, where the stopping rolls are above the conveyor belt in a transverse position to the longitudinal direction of the conveyor, and to the second position, where the stopping rolls are on the sides of the conveyor belt (Fig. 2d).

At a distance from second end of the conveyor there are two supporting rolls 60, which are fastened, like the stopping rolls, pivotally to the chassis of the baler on both sides of the conveyor. The supporting rolls have similar structure to the stopping rolls, and they are fastened to the chassis, like the stopping rolls, with articulated arms 52 and joint pins. Figure 1b shows the supporting rolls in the first position, where they are in a transverse position to the longitudinal direction of the conveyor above the conveyor belt. The supporting rolls can be turned to the second position by means of the turning cylinders 54 such that the axes of the supporting rolls are substantially parallel to the longitudinal direction of the conveyor (Fig. 2a). The functioning of the turning cylinders regulating the position of the stopping rolls and the supporting rolls is controlled by a control unit controlling the functioning of the baler.

Figure 2a shows by way of example the second end of the baler according to the invention in a top view. The figure shows the second end of the conveyor 40 belonging to the baler, and the stopping rolls 50 and the supporting rolls 60. For the sake of clarity, parts belonging to the wrapper are not presented in the figure, but only the wrapping area 38 of the wrapper, i.e. the area, into which the bale is positioned for the time of wrapping with the protective film. The wrapping area is shown with a broken line in the figure.

In Figure 2a the supporting rolls 60 are in the second position turned onto the side of the conveyor belt 42. The axes of the supporting rolls extend thereby substantially parallel to the longitudinal direction of the conveyor. The supporting rolls in the second position have moved substantially entirely away from above the upper surface of the conveyor, whereby between them a free space is opened, the width of which is greater than the width of the bale 100 formed in the baling chamber in the transverse direction of the conveyor. Thus, there is room for the bale resting on the conveyor belt to move between the supporting rolls in the second position.

In Figure 2a, the stopping rolls 50 are in the first position above the upper surface of the conveyor, whereby their axes extend substantially in perpendicular direction to the longitudinal direction of the conveyor. The stopping rolls in this position are clearly on the trajectory of the bale resting on the conveyor. The bales resting on the moving conveyor belt collide into the stopping rolls, whereby their movement parallel to the direction of the conveyor stops, even if the conveyor belt is still moving. The moving conveyor belt makes the round bale of cylindrical shape laying on the conveyor belt, which bale has stopped against the stopping rolls, to rotate in its position about its axis. The stopping rolls and the supporting rolls are in the position shown in Figure 2a, when the bale formed in the baling chamber arrives at the wrapper for wrapping with the protective film. The bale then stops at the wrapping area 38 of the wrapper.

In Figure 2b, the end of the baler according to the invention is shown in a top view, when there is a bale 100 in the wrapping area of the wrapper. The bale is shown with broken lines in the figure. In Figure 2c, the end of the baler of the Figure 2b is shown in a side view. In the phase of wrapping with the protective film, tractive forces effecting into different directions apply from the tightly wrapped protective film to the bale, which forces try to move, especially rotate, the bale on the conveyor belt. To keep the bale in its place during the wrapping with the protective film the supporting rolls 60 are turned by changing the length of the turning cylinders 54 to the first position shown in Figure 2b, where they lay, like the stopping rolls, transversely on the conveyor belt 42. The bale resting on the conveyor belt is then supported with its first curved edge at the stopping rolls 50 and with its second curved edge at the supporting rolls 60. The rotating conveyor belt makes the bale rotate in its position about its middle axis. The supporting rolls and the stopping rolls are bearing-mounted about their axes freely rotating, so that they do not prevent or slow down the rotating movement of the bale. During the rotating movement of the bale the wrapping arms 34 of the wrapper rotate horizontally along the circular trajectory around the bale and wrap the bale with protective film released from the protective film roll 36 (Fig. 2c).

Figure 2d shows by way of example the second end of the baler according to the invention in a top view when the bale 100 is being discharged from the wrapper. Once the wrapping with the protective film is finished the bale is removed from the wrapping area 38 of the wrapper. For removing of the bale the stopping rolls 50 are turned by changing the length of the turning cylinders 54 to the second position shown in Figure 2d onto the sides of the conveyor belt 42. The axes of the supporting rolls extend thereby substantially parallel to the longitudinal direction of the conveyor. The stopping rolls in the second position have moved substantially entirely away from above the upper surface of the conveyor, whereby between them a free space is opened, the width of which is greater than the width of the bale 100 wrapped with protective film. Thus, there is room for the bale released from the wrapper to move between the rolls in the second position and to fall down from the conveyor 40 when the conveyor is operated. As the bale wrapped with protective film has left the conveyor, the wrapper is ready for receiving the next bale to be wrapped.

Some preferred embodiments of the baler and the method according to the invention are described above. The invention is not limited to the solutions described above, but the inventive idea may be applied in different ways within the scope defined by the claims.

## Claims

1. A baler, comprising a baling chamber (20) for forming a bale (100), a wrapper (30) for wrapping a protective film around the formed bale, which wrapper comprises a wrapping area (38), and a conveyor (40) for moving the bale from the baling chamber into the wrapper, which conveyor has a second end situated on the wrapper side, which second end of the conveyor is adapted to extend to the wrapping area of the wrapper for wrapping the protective film around the bale laying on the conveyor and which second end of the conveyor (40) comprises at least one movable stopping roll (50), which is movable to a first position above the level of the upper surface of the conveyor (40) and to a second position away from the level of the upper surface of the conveyor (40), **characterized in that** the conveyor (40) comprises a first side and a second side, and in the second end of the conveyor (40) there are two stopping rolls (50), the first stopping roll (50) being on the first side of the conveyor (40) and the second stopping roll (50) being on the second side of the conveyor (40).

2. The baler according to claim 1, **characterized in that** at a distance from the second end of the conveyor (40) there is at least one supporting roll (60), which is movable to a first position above the level of the upper surface of the conveyor and to a second position away from the level of the upper surface of the conveyor.

3. The baler according to claim 2, **characterized in that** at a distance from the second end of the conveyor (40) there are two supporting rolls (60), the first supporting roll of which being on the first side of the conveyor and the second supporting roll being on the second side of the conveyor (40).

4. The baler according to any of the claims 1-3, **characterized in that** the conveyor (40) comprises a conveyor belt (42) and an actuator for rotating the conveyor belt.

5. The baler according to any of the claims 1-4, **characterized in that** the wrapper (30) comprises a support frame (32, 33) and at least one wrapping arm (34) bearing-mounted to the support frame for bearing and moving the protective film roll (36).

6. The baler according to any of the claims 1-5, **characterized in that** it is a round baler and the baling chamber (20) comprises means for making round bales.

7. The baler according to any of the claims 1-6, **characterized in that** it is a movable baler with wheels (12) and a drawbar (14) for fastening to the towing vehicle.

## Patentansprüche

1. Ballenpresse, umfassend eine Ballenkammer (20) zum Formen eines Ballens (100), eine Wickelvorrichtung (30) zum Wickeln einer Schutzfolie um den geformten Ballen, wobei die Wickelvorrichtung einen Wickelbereich (38), und eine Fördervorrichtung (40) zum Bewegen des Ballens von der Ballenkammer in die Wickelvorrichtung umfasst, wobei die Fördervorrichtung ein zweites, auf der Seite der Wickelvorrichtung befindliches Ende hat, wobei das zweite Ende der Fördervorrichtung dazu ausgeführt ist, sich in den Wickelbereich der Wickelvorrichtung zum Wickeln der Schutzfolie um den auf der Fördervorrichtung liegenden Ballen zu erstrecken, und wobei das zweite Ende der Fördervorrichtung (40) zumindest eine bewegliche Stopprolle (50) umfasst, bewegbar in eine erste Position über dem Niveau der oberen Oberfläche der Fördervorrichtung (40) und in eine zweite Position entfernt von dem Niveau der oberen Oberfläche der Fördervorrichtung (40), **dadurch gekennzeichnet, dass** die Fördervorrichtung (40) eine erste Seite und eine zweite Seite umfasst, und dass sich im zweiten Ende der Fördervorrichtung (40) zwei Stopprollen (50) befinden, wobei die erste Stopprolle (50) auf der ersten Seite der Fördervorrichtung (40) befindlich ist und die zweite Stopprolle (50) auf der zweiten Seite der Fördervorrichtung (40) befindlich ist.

2. Ballenpresse nach Anspruch 1, **dadurch gekennzeichnet, dass** es in einem Abstand vom zweiten Ende der Fördervorrichtung (40) zumindest eine Stützrolle (60) gibt, die in eine erste Position über dem Niveau der oberen Oberfläche der Fördervorrichtung und in eine zweite Position entfernt von dem Niveau der oberen Oberfläche der Fördervorrichtung bewegbar ist.

3. Ballenpresse nach Anspruch 2, **dadurch gekennzeichnet, dass** es in einem Abstand von dem zweiten Ende der Fördervorrichtung (40) zwei Stützrollen (60) gibt, von denen die erste Stützrolle auf der ersten Seite der Fördervorrichtung befindlich ist und die zweite Stützrolle auf der zweiten Seite der Fördervorrichtung (40) befindlich ist.

4. Ballenpresse nach einem der Ansprüche 1-3, **dadurch gekennzeichnet, dass** die Fördervorrichtung (40) ein Förderband (42) und einen Aktuator zum Drehen des Förderbands umfasst.

5. Ballenpresse nach einem der Ansprüche 1-4, **dadurch gekennzeichnet, dass** die Wickelvorrichtung (30) einen Stützrahmen (32, 33) und zumindest einen an dem Stützrahmen gelagerten Wickelarm (34) zum Tragen und Bewegen der Schutzfolienrolle (36) umfasst.

6. Ballenpresse nach einem der Ansprüche 1-5, **dadurch gekennzeichnet, dass** sie eine Rundballenpresse ist und dass die Ballenkammer (20) Mittel zum Herstellen runder Ballen umfasst.

7. Ballenpresse nach einem der Ansprüche 1-6, **dadurch gekennzeichnet, dass** sie eine bewegbare Ballenpresse mit Rädern (12) und einer Zugstange (14) zum Befestigen an dem Zugfahrzeug ist.

## Revendications

1. Ramasseuse-presse comprenant une chambre de formation de balle (20) pour former une balle (100), une emballeuse (30) pour enrouler un film de protection autour de la balle formée, laquelle emballeuse comprend une zone d'emballage (38) et un transporteur (40) pour déplacer la balle de la chambre de formation de balle dans l'emballeuse, lequel transporteur a une seconde extrémité située sur le côté de l'emballeuse, laquelle seconde extrémité du transporteur est adaptée pour s'étendre jusqu'à la zone d'emballage de l'emballeuse pour enrouler le film de protection autour de la balle se trouvant sur le transporteur et laquelle seconde extrémité du transporteur (40) comprend au moins un rouleau d'arrêt mobile (50), qui est mobile d'une première position au-dessus du niveau de la surface supérieure du transporteur (40) jusqu'à une seconde position à distance du niveau de la surface supérieure du transporteur (40), **caractérisée en ce que** le transporteur (40) comprend un premier côté et un second côté, et dans la seconde extrémité du transporteur (40), on trouve deux rouleaux d'arrêt (50), le premier rouleau d'arrêt (50) étant du premier côté du transporteur (40) et le second rouleau d'arrêt (50) étant du second côté du transporteur (40).

2. Ramasseuse-presse selon la revendication 1, **caractérisée en ce qu'**à une certaine distance de la seconde extrémité du transporteur (40), on trouve au moins un rouleau de support (60), qui est mobile d'une première position au-dessus du niveau de la surface supérieure du transporteur jusqu'à une seconde position à distance du niveau de la surface supérieure du transporteur.

3. Ramasseuse-presse selon la revendication 2, **caractérisée en ce qu'**à une certaine distance de la seconde extrémité du transporteur (40), on trouve deux rouleaux de support (60), dont le premier rouleau de support est sur le premier côté du transporteur et dont le second rouleau de support est sur le second côté du transporteur (40).

4. Ramasseuse-presse selon l'une quelconque des revendications 1 à 3, **caractérisée en ce que** le transporteur (40) comprend une courroie transporteuse (42) et un actionneur pour faire tourner la courroie transporteuse.

5. Ramasseuse-presse selon l'une quelconque des revendications 1 à 4, **caractérisée en ce que** l'emballeuse (30) comprend un bâti de support (32, 33) et au moins un bras d'emballage (34) monté, par palier, sur le bâti de support pour supporter et déplacer le rouleau de film de protection (36).

6. Ramasseuse-presse selon l'une quelconque des revendications 1 à 5, **caractérisée en ce qu'**il y a une ramasseuse-presse ronde et la chambre de formation de balle (20) comprend des moyens pour faire des balles rondes.

7. Ramasseuse-presse selon l'une quelconque des revendications 1 à 6, **caractérisée en ce qu'**il y a une ramasseuse-presse mobile avec des roues (12) et une barre de traction (14) pour se fixer au véhicule de remorquage.
